# FASCICULE DE BREVET EUROPEEN

(11) **EP 1 561 989 B1**
(45) Date de publication et mention de la délivrance du brevet: **08.01.2014**
(21) Numéro de dépôt: 05290151.9
(22) Date de dépôt: 24.01.2005
(51) Int. Cl.: F16L 37/091

(54) **Procédé de fabrication d'une rondelle pour un dispositif de raccordement de tube, et dispositif de raccordement**
Verfahren zur Herstellung eines Verbindungselements für eine Rohrkupplung und die entsprechende Rohrkupplung
Method for manufacturing an attachment ring and the coupling device

(30) Priorité: 05.02.2004 FR 0401100
(43) Date de publication de la demande: 10.08.2005
(73) Titulaire: PARKER HANNIFIN MANUFACTURING France SAS, 74100 Ville-la-Grand (FR)
(72) Inventeur: Coquard, Jean-Luc, 25640 La Tour de Scay (FR); Le Quere, Philippe, 35830 Betton (FR); Bogard, Olivier, 35200 Rennes (FR)
(74) Mandataire: Lavialle, Bruno François Stéphane

(56) Documents cités:
- EP-A- 0 197 874
- EP-A- 0 550 323
- DE-U- 20 004 291
- FR-A- 2 829 830
- FR-A- 2 835 903
- GB-A- 2 182 743
- GB-A- 2 246 405
- US-A- 4 062 574
- US-A- 4 313 331
- US-A- 5 039 141
- US-A- 5 487 572
- US-A- 5 695 224
- US-A- 5 816 627
- US-A- 5 988 690

## Description

La présente invention concerne, un procédé de fabrication d'une rondelle dentée et un dispositif de raccordement de type raccord à connexion instantanée.

Il existe de nombreux dispositifs permettant la connexion instantanée d'un tube à un dispositif de raccordement intermédiaire, soit entre ce tube et un autre tube, soit entre ce tube et un appareil d'une installation (distributeur, vérin,....), qu'il soit rapporté ou intégré dans cet appareil.

Le dispositif de raccordement comporte des moyens pour retenir de manière étanche l'extrémité du tube dans un alésage destiné à accueillir cette extrémité, après que celle-ci y a été librement introduite, à l'encontre d'un effort d'extraction. En plus d'un joint d'étanchéité, ces moyens comprennent généralement une rondelle à denture intérieure dont les dents sont soulevées par flexion lors de l'introduction du tube et tendent à mordre le tube pour s'opposer à son extraction.

Une rondelle pour dispositif de raccordement de tube comprend généralement une portion extérieure destinée à être logée dans une gorge ménagée dans l'alésage du dispositif de raccordement et une portion intérieure divisée en une pluralité de dents ayant des parties actives ayant un bord libre qui délimite un bord intérieur de la rondelle et qui est agencé pour pénétrer une surface externe du tube.

Le document US 5 816 627 décrit un procédé de fabrication d'une telle rondelle.

Une telle rondelle assure une retenue efficace du tube dans le dispositif de raccordement et est fabriquée par poinçonnage, ce qui permet d'obtenir des formes variées à un coût relativement faible.

Le document US 5 487 572 décrit un dispositif de raccordement de tube selon le préambule de la revendication 5.

Or, il apparaît qu'avec de telles rondelles il existe un risque d'extraction du tube lorsque le tube est soumis à un effort d'arrachage particulièrement important.

Un but de l'invention est de fournir un moyen permettant d'améliorer la retenue du tube exercée par les rondelles pour dispositif de raccordement de tube.

Cet objectif est obtenu par un procédé de fabrication d'une rondelle selon la revendication 1, et par un dispositif de raccordement de tube selon la revendication 5.

Dans les rondelles connues, les parties actives des dents sont écartées les unes des autres. Il en résulte, lors d'un effort d'arrachement du tube, des concentrations de contraintes au niveau de l'interface entre le tube et les parties actives des dents. Ceci fait naître le risque d'un arrachement, ou d'une déformation, local du matériau constituant le tube de sorte que la rondelle ne peut plus assurer correctement la retenue du tube.

Selon une alternative, on prévoit, une rondelle pour dispositif de raccordement de tube, ayant une portion intérieure divisée en une pluralité de dents qui possèdent une partie de racine de faible hauteur s'étendant au repos dans un plan radial et une partie active inclinée sur le plan radial et qui sont reliées entre elles par des parties périphériques de liaison telles que la déformation de ces parties périphériques de liaison résultant d'une déformation d'ensemble de la rondelle soit prépondérante en regard de celle des dents. Les parties actives ont un bord libre qui délimite un bord intérieur de la rondelle et qui est agencé pour pénétrer une surface externe du tube, les parties actives étant agencées pour que le bord intérieur soit sensiblement continu.

Cette rondelle peut être utilisée comme une ébauche pour la réalisation finale de la rondelle ou directement dans le dispositif de raccordement. Avec une telle rondelle, les dents ont une partie active ayant un bord libre présentant la plus grande longueur possible, ce qui permet de mieux répartir les contraintes lorsque les dents mordent dans un tube soumis à un effort d'arrachement.

De préférence, les parties actives possèdent des bords latéraux qui s'étendent sensiblement radialement.

Ceci facilite la fabrication de la rondelle.

L'invention a comme objet un procédé de fabrication d'une rondelle pour dispositif de raccordement de tube, comportant une étape de formation de parties actives de dents dans une portion intérieure d'une ébauche de rondelle de telle manière que les parties actives ont un bord libre qui délimite un bord inférieur sensiblement continu de la rondelle et qui est agencé pour pénétrer une surface externe du tube, cette étape étant réalisée par cisaillage, le cisaillage ne résultant pas d'un enlèvement de matière de l'ébauche de rondelle.

Ainsi, alors que le poinçonnage suppose un enlèvement de matière qui réduit la longueur maximale possible des parties actives des dents, le cisaillage ne résulte pas d'un enlèvement de matière et permet donc l'obtention de cette longueur maximale.

Selon une caractéristique particulière, le procédé comprend l'étape de déformer les parties actives pour former au moins une portion en saillie par rapport à un plan général de la dent.

Ceci permet d'immobiliser en rotation la rondelle par rapport au tube et d'empêcher une extraction du tube par dévissage. Du fait de la grande longueur des parties actives, la portion en saillie peut être obtenue par déformation de la partie active tout en conservant une longueur de partie active suffisante pour accrocher le tube.

L'invention concerne en outre un dispositif de raccordement de tube comportant un corps pourvu d'un alésage pour recevoir l'extrémité de ce tube et des moyens de retenue du tube dans l'alésage constitués par une rondelle élastiquement déformable comportant une portion extérieure disposée dans une gorge ménagée dans l'alésage avec un flan aval incliné et une portion intérieure divisée en une pluralité de dents qui possèdent une partie de racine de faible hauteur qui au repos s'étend dans un plan radial et une partie active inclinée sur le plan radial et qui sont reliées entre elles par des parties périphériques de liaison telles que la déformation de ces parties périphériques de liaison résultant d'une déformation d'ensemble de la rondelle soit prépondérante en regard de celle des dents, le dispositif comprenant une butée pour les dents lors d'un effort d'arrachement excessif du tube, autour de laquelle chaque dent pivote, la partie périphérique de la rondelle prenant alors appui sur le flan incliné de la gorge, et les parties actives des dents étant agencées pour avoir après pivotement des bords latéraux immédiatement adjacents deux à deux de telle manière que lesdits bords latéraux sont sensiblement en contact.

Une rondelle telle que celle selon l' alternative mentionnée ci-dessus est déformable pratiquement uniquement au niveau des parties de liaison des dents entre elles. Après pivotement, les dents sont dans une position dans laquelle leur partie active est pratiquement radiale et pénètre au maximum dans la paroi du tube. Si l'effort d'arrachement continue à être exercé, les parties actives travaillent alors en flexion entre la butée et le tube en opposant une résistance à cet effort d'arrachement beaucoup plus importante que celle qu'elle lui opposait à l'origine. Les parties actives des dents ayant en position radiale leurs bords latéraux adjacents les uns aux autres, la rondelle est en contact avec le tube sur la quasi-totalité de sa circonférence. Une répartition des contraintes sur toute la circonférence est ainsi réalisée et la résistance à l'arrachement est relativement importante.

De préférence, le dispositif comporte un poussoir tubulaire monté à coulissement à l'intérieur de l'alésage entre une première position sortie inactive et une seconde position rentrée active, dans laquelle les dents de la rondelle sont écartées de leur position de repos par un nez du poussoir, le nez du poussoir, dans sa position inactive, constituant la butée pour les dents.

Le poussoir a alors une double fonction : il permet en position active la déconnexion du tube et constitue en position inactive la butée de pivotement des dents de la rondelle.

D'autres caractéristiques et avantages de l'invention ressortiront de la description donnée ci-après d'un mode de sa réalisation.

Il sera fait référence aux dessins annexés parmi lesquels :
- la figure 1 est une vue en perspective d'une rondelle fabriquée selon le procédé selon l'invention,
- la figure 2 est une vue en élévation de cette rondelle lorsque les dents s'étendent dans un plan radial,
- les figures 3 et 4 sont des vues analogues à la figure 2 de rondelles selon des variantes de réalisation,
- les figures 5 et 6 sont des vues partielles en perspective de variantes de réalisation des parties actives des dents de la rondelle,
- la figure 7 est un schéma en coupe d'un mode de réalisation du dispositif de raccordement selon l'invention avec un poussoir de désaccouplement du tube,
- la figure 8 est un schéma en coupe illustrant l'état du dispositif de raccordement en l'absence de tube,
- les figures 9, 10 sont des schémas illustrant le comportement de la rondelle à denture dans le dispositif selon la figure 7 lors d'un effort d'extraction excessif du tube.

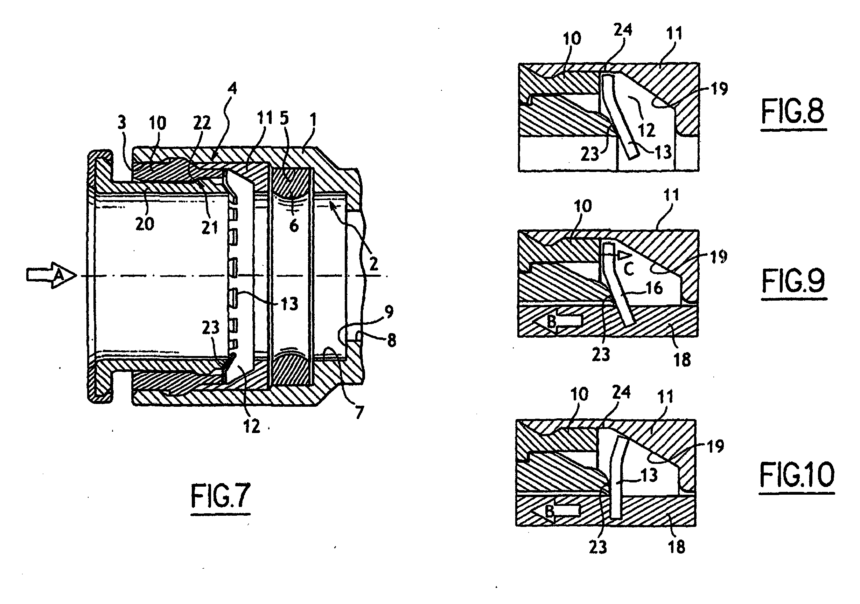

La figure 7 représente vu en coupe un dispositif de raccordement pour un tube, comportant un corps 1 qui est pourvu d'un alésage 2 divisé axialement en quatre parties à savoir de gauche à droite une partie de grand diamètre 3 pour recevoir un insert 4, une partie de plus petit diamètre 5 pour recevoir un joint torique 6, une partie 7 dont le diamètre correspond sensiblement au diamètre extérieur du tube à insérer dans ce raccord et une partie 8 dont le diamètre est sensiblement égal au diamètre intérieur de ce tube. Entre les parties 7 et 8, un épaulement 9 constitue une butée à l'enfoncement du tube dans le raccord. Dans un mode particulier de réalisation, la partie 7 de l'alésage peut être légèrement conique, la petite base étant tournée vers la partie 8, pour créer une légère compression de la paroi du tube lorsqu'il pénètre dans cette partie 7.

L'insert 4 est ici représenté en deux parties 10 et 11 qui sont introduites et maintenues à force dans le corps 1 selon une technique connue, notamment si le corps 1 est en matière plastique et les inserts métalliques. Les deux parties 10 et 11 définissent entre elles une gorge 12 qui constitue un logement pour une rondelle 13 pourvue de dents d'accrochage et de retenue du tube qui sera introduit dans l'alésage 2.

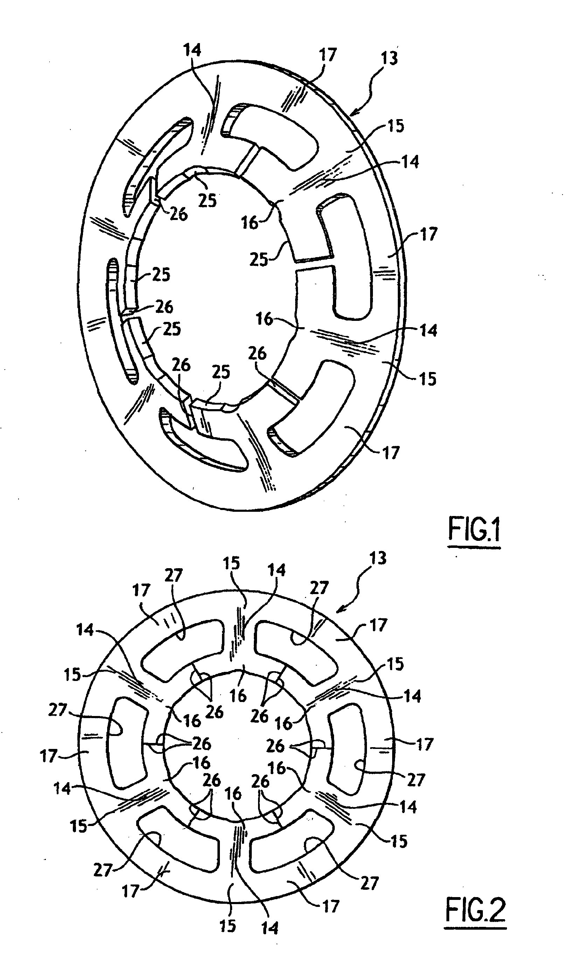

En référence également à la figure 1, la rondelle 13 comporte donc une pluralité de dents 14 intérieures ici réalisées sous forme de palettes comportant chacune une racine 15 s'étendant, lorsque la rondelle est au repos, dans un plan sensiblement radial, et une partie active 16 qui forme un angle, ici de 25°, avec la racine 15. La partie active 16 de chaque dent est sensiblement plane ou légèrement conique.

Chaque dent est reliée à la dent adjacente par une partie périphérique de liaison 17 de faible section c'est-à-dire de largeur au plus égale à la largeur de la racine 15. En outre, chaque partie de liaison 17 est d'une longueur périphérique (mesurée selon une direction tangentielle de la rondelle) au moins égale à la longueur (mesurée selon un rayon de la rondelle) de chaque dent. Les dents 14 sont ainsi à leur racine écartées l'une de l'autre de manière suffisamment importante pour que la partie de liaison 17 ne soit pas trop rigide et puisse aisément encaisser des déformations de torsion. Dans un mode préféré de réalisation donné ci-après à titre d'exemple non limitatif, la largeur de chaque partie de liaison 17 est au plus égale au cinquième de la largeur totale de la rondelle ou de la longueur 1 définie ci-dessus.

En revanche chaque dent 14 forme un corps indéformable susceptible de pivoter d'un bloc.

Les parties actives 16 ont un bord libre 25 agencé pour mordre la surface externe du tube et de longueur telle que la somme des longueurs des bords libres de chaque dent 14 coopérant avec le tube soit suffisamment importante pour que l'agrippement de ce tube soit réparti sur la quasi-totalité de sa circonférence. Les parties actives 16 des dents 14 ont des bords latéraux 26 immédiatement adjacents deux à deux de telle manière que, lorsque la rondelle 13 est déformée au point que les parties actives 16 s'étendent dans un plan radial, les bords latéraux 26 des parties actives 16 sont sensiblement en contact et définissent un bord intérieur de la rondelle 13 qui soit sensiblement continu.

Le raccord comporte un poussoir tubulaire 20, mobile à coulissement dans la partie 10 de l'insert entre une position sortie inactive dans laquelle il est par un épaulement 21 en butée avec un épaulement 22 de cette partie 10, la rondelle 13 étant alors simplement en appui sur le nez 23 de ce poussoir 20 et une position rentrée dans laquelle les épaulements 21, 22 sont espacés l'un de l'autre et le nez 23 soulève la totalité des parties actives 16. Cette disposition est tout à fait connue dans ce type de raccord.

A la figure 8, par une vue en coupe de détail, on a représenté la rondelle 13 dans sa position de repos logée dans la gorge 12 dont le fond 24 est de largeur plus importante que l'épaisseur de la rondelle 13. On notera par ailleurs que le diamètre de la gorge 12 mesuré au niveau de son fond 24 est un peu plus important que le diamètre extérieur de la rondelle 13 si bien qu'un jeu existe entre la rondelle 13 et la gorge 12 pour les raisons décrites ci-après.

Lors de l'introduction du tube 18 dans l'alésage (flèche A, de gauche à droite sur la figure 7), le tube a pour effet de soulever chacune des dents qui, en tant que corps indéformable, tourne autour de chacune des parties de liaison qui la relie aux dents adjacentes dans le fond de la gorge 12 où elle est logée. La rotation de la dent 14 dépend essentiellement de la différence entre le diamètre extérieur du tube 18 et le diamètre intérieur de la rondelle 13 au repos et dans certains exemples de réalisation, cet angle peut atteindre 40°. Pour que ce pivotement soit possible, la gorge 12 possède un flan 19 incliné. Ce flan 19 est situé en aval par rapport au sens d'introduction du tube, le fond de la rainure étant sensiblement égal en largeur à l'épaisseur de la rondelle 13.

Dans ces conditions, lors de l'introduction du tube, il ne se produit qu'une rotation des dents vers le haut sans translation sensible de la rondelle dans le sens d'introduction du tube. Lorsque le tube est mis en place, la partie active 16 est inclinée sur l'axe du tube d'un angle d'environ 25°.

Un effort d'extraction du tube 18 dans un sens inverse à celui de son introduction (flèche B sur les figures 9 et 10) augmente l'effort sous lequel chaque dent 14 mord dans la paroi du tube 18 et tend à faire tourner chaque dent 14 en direction de la position de repos de la rondelle 13 (voir la figure 9). On notera que compte tenu de la position très inclinée de chaque dent 14 sur l'axe du tube 18 et de sa non-flexibilité (absence de flambage), un petit mouvement de recul du tube engendre un mouvement de pénétration de chaque dent 14 dans le tube 18 d'une amplitude au moins égale sinon supérieure à celle du mouvement. Cette vive pénétration de chaque dent dans le tube 18 constitue un moyen très efficace pour empêcher le recul de ce tube.

La continuation de cet effort d'extraction fait porter la dent 14 sur le nez 23 du poussoir 20 qui est un point fixe, (légèrement déformable) autour duquel la dent tend à basculer au-delà de la position de repos de la rondelle en entraînant la partie périphérique dans une rotation dans le sens marqué C sur la figure 9. Cette rotation est permise grâce à la souplesse en torsion des parties 17 de liaison des dents entre elles à la périphérie de la rondelle. On constate alors que la rondelle passe brutalement de sa forme de repos à une autre forme représentée à la figure 10 dans laquelle les parties actives 16 sont dans un plan sensiblement radial alors que les racines 15 sont inclinées sur ce plan. Le basculement de la rondelle de sa forme de la figure 9 à la forme de la figure 10 a été rendu possible par la présence du jeu mentionné ci-dessus. On voit que dans sa nouvelle forme, la partie périphérique de la rondelle prend appui sur le flanc incliné 19 de la gorge 12 et la poursuite de la traction du tube 18 est alors entravée par la rondelle qui ne peut plus pivoter autour du nez du poussoir puisque sa partie périphérique est en butée sur le flanc 19. La partie active 16 de chaque dent 14 est alors sollicitée en flexion pure dont l'effort sera fonction de la nature du matériau du tube 18.

On notera que dans la forme de la figure 10, les parties actives 16 s'étendent dans un plan sensiblement radial, les bords latéraux 26 des parties actives 16 sont alors sensiblement en contact et définissent un bord intérieur de la rondelle 13 qui est sensiblement continu. On obtient ainsi une répartition optimale des contraintes engendrées par l'effort d'arrachement à l'interface entre le tube et les parties actives des dents.

On aura donc remarqué que dans des conditions normales de sollicitation du tube dans le sens de son extraction du raccord, les dents de la rondelle travaillent par résistance au flambement.

Dès que ces conditions normales sont dépassées, ces dents travaillent comme des obstacles radiaux à l'extraction et elles sont soumises à des contraintes de nature différente. Elles peuvent donc présenter des caractéristiques de résistance différentes selon que les sollicitation du tube sont normales ou excessives.

Dans le mode de réalisation permettant un changement d'état de la rondelle, la présence nécessaire d'un jeu pour que ce changement d'état puisse s'opérer, autorise un léger recul du tube cramponné par la rondelle, qui peut être limité en déterminant au plus juste le jeu de fond de gorge.

La rondelle 13 est obtenue par un procédé de fabrication qui va maintenant être décrit.

Ce procédé comprend une étape de poinçonnage d'une ébauche de rondelle plane dans laquelle sont formés le trou central et les lumières 27 destinées à séparer les parties de liaison 17 et les parties actives 16. Les lumières 27 ont ici une forme en segment annulaire.

Une étape de cisaillage est ensuite réalisée selon des lignes de découpe radiales s'étendant entre le trou central et les lumières 27 pour séparer les parties actives 16 les unes des autres en formant les bords latéraux 26. Les bords latéraux 26 s'étendent alors radialement et chaque paire de parties actives adjacentes a des bords latéraux 26 parallèles et en regard.

Le procédé comprend ensuite une étape d'emboutissage consistant à conformer la rondelle de telle manière que, les parties de racine s'étendant dans un plan radial, les parties actives soient inclinées par rapport aux parties de racine. La rondelle a ainsi une forme sensiblement tronconique.

Bien entendu, l'invention n'est pas limitée aux modes de réalisation décrits mais englobe toute variante entrant dans le cadre de l'invention défini par les revendications.

L'invention s'applique également à d'autres types de dispositifs de raccordement et notamment à ceux dépourvus de poussoir de déconnexion.

La butée de pivotement des dents peut être formé par l'extrémité de la partie 10 de l'insert 4 reliée à la partie 11 de celui-ci.

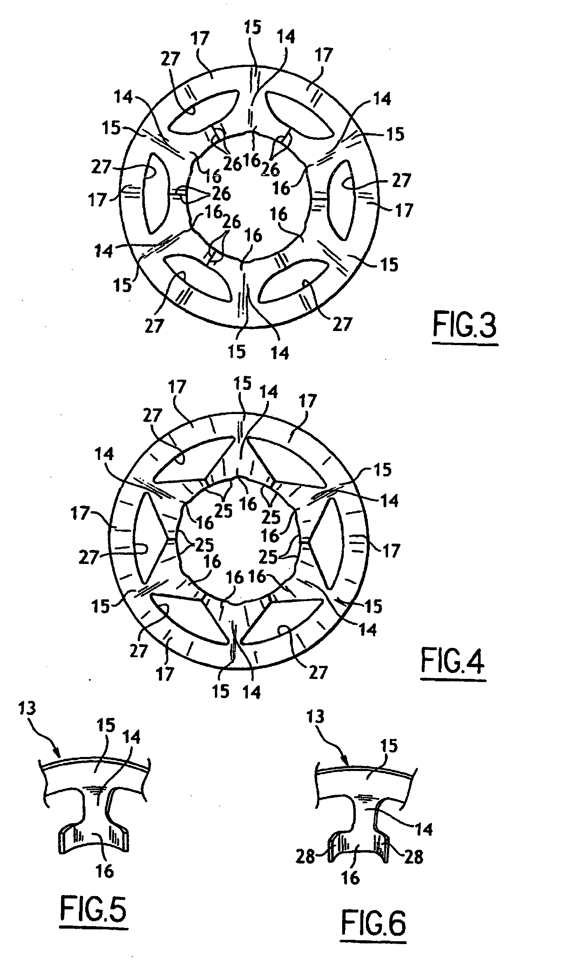

Les dents de la rondelle peuvent avoir d'autres formes que la forme en T représentée aux figures 1 et 2. Les dents peuvent ainsi avoir une forme plus triangulaire telle que celle représentée à la figure 4 ou une forme intermédiaire telle que celle représentée à la figure 3.

En variante, le procédé comprend l'étape de déformer les parties actives pour former au moins une portion en saillie par rapport à un plan général de la dent. La partie active peut alors avoir une forme incurvée autour d'un rayon de la rondelle (voir la figure 5) ou comporter latéralement des rebords 28 en saillie du plan moyen de la partie active 16 (voir la figure 6). Ceci permet d'immobiliser en rotation la rondelle par rapport au tube et d'empêcher une extraction du tube par dévissage.

## Revendications

1. Procédé de fabrication d'une rondelle pour dispositif de raccordement de tube, comportant une étape de formation de parties actives (16) de dents (14) dans une portion intérieure d'une ébauche de rondelle de telle manière que les parties actives (16) ont un bord libre qui délimite un bord intérieur sensiblement continu de la rondelle et qui est agencé pour pénétrer une surface externe du tube, **caractérisé en ce que** cette étape est réalisée par cisaillage, le cisaillage ne résultant pas d'un enlèvement de matière de l'ébauche de rondelle.

2. Procédé selon la revendication 1, **caractérisé en ce que** le cisaillage est réalisé selon des lignes de découpe radiales.

3. Procédé selon la revendication 2, les dents (14) de la rondelle comportant des parties de racine (15) qui sont reliées aux parties actives (16), **caractérisé en ce qu'**il comprend l'étape ultérieure de conformer la rondelle de telle manière que, les parties de racine s'étendant dans un plan radial, les parties actives soient inclinées par rapport aux parties de racine.

4. Procédé selon l'une quelconque des revendications 1 à 3, **caractérisé en ce qu'**il comprend l'étape de déformer les parties actives pour former au moins une portion en saillie par rapport à un plan général de la dent.

5. Dispositif de raccordement de tube (18) comportant un corps (1) pourvu d'un alésage (2) pour recevoir l'extrémité de ce tube et des moyens de retenue du tube dans l'alésage constitués par une rondelle (13) élastiquement déformable comportant une portion extérieure disposée dans une gorge (12) ménagée dans l'alésage (2) avec un flan (19) aval incliné et une portion intérieure divisée en une pluralité de dents (14) qui possèdent une partie de racine (15) de faible hauteur s'étendant au repos dans un plan radial et une partie active (16) inclinée sur le plan radial et qui sont reliées entre elles par des parties périphériques de liaison (17) telles que la déformation de ces parties périphériques de liaison (17) résultant d'une déformation d'ensemble de la rondelle (13) soit prépondérante en regard de celle des dents (14), le dispositif comprenant une butée pour les dents (14) lors d'un effort d'arrachement excessif du tube (18), autour de laquelle chaque dent pivote, la partie périphérique de la rondelle prenant alors appui sur le flan (19) incliné de la gorge (12), **caractérisé en ce qu'**après pivotement les parties actives (16) des dents (14) ont des bords latéraux (26) immédiatement adjacents deux à deux de telle manière que lesdits bords latéraux (26) sont sensiblement en contact.

6. Dispositif selon la revendication 5, **caractérisé en ce qu'**il comporte un poussoir (20) tubulaire monté à coulissement à l'intérieur de l'alésage (2) entre une première position sortie inactive et une seconde position rentrée active, dans laquelle les dents de la rondelle sont écartées de leur position de repos par un nez (23) du poussoir, le nez du poussoir, dans sa position inactive, constituant la butée pour les dents.

7. Dispositif selon la revendication 6, **caractérisé en ce qu'**après pivotement, la rondelle est dans une seconde forme stable, dans laquelle la racine (15) des dents est inclinée et leur partie active (16) contenue dans un plan sensiblement radial.

## Patentansprüche

1. Verfahren zur Herstellung einer Ringscheibe für eine Rohrverbindungsvorrichtung, umfassend einen Schritt des Ausbildens aktiver Abschnitte (16) von Zähnen (14) in einem Innenabschnitt eines Ringscheibenrohlings, derart, dass die aktiven Abschnitte (16) einen freien Rand haben, der einen im Wesentlichen durchgehenden Innenrand der Ringscheibe begrenzt und der so ausgebildet ist, dass er in eine Außenfläche des Rohres eindringt, **dadurch gekennzeichnet, dass** dieser Schritt durch Scherschneiden erfolgt, wobei das Scherschneiden keinen Werkstoffabtrag des Ringscheibenrohlings zur Folge hat.

2. Verfahren nach Anspruch 1, **dadurch gekennzeichnet, dass** das Scherschneiden entlang radialer Schnittlinien erfolgt.

3. Verfahren nach Anspruch 2, wobei die Zähne (14) der Ringscheibe Basisabschnitte (15) umfassen, die mit den aktiven Abschnitten (16) verbunden sind, **dadurch gekennzeichnet, dass** es den weiteren Schritt des Formens der Ringscheibe umfasst, derart, dass, wenn sich die Basisabschnitte in einer radialen Ebene erstrecken, die aktiven Abschnitte in Bezug auf die Basisabschnitte geneigt sind.

4. Verfahren nach einem der Ansprüche 1 bis 3, **dadurch gekennzeichnet, dass** es den Schritt des Verformens der aktiven Abschnitte umfasst, um mindestens einen in Bezug auf eine Hauptebene des Zahns vorstehenden Abschnitt auszubilden.

5. Verbindungsvorrichtung für ein Rohr (18), umfassend ein Gehäuse (1), das mit einer Bohrung (2) versehen ist, um das Ende dieses Rohres aufzunehmen, sowie mit Rückhaltemitteln zum Halten des Rohres in der Bohrung, die aus einer elastisch verformbaren Ringscheibe (13) gebildet sind, die einen Außenabschnitt umfasst, der in einer Nut (12) angeordnet ist, die in der Bohrung (2) mit einer stromabwärtigen, schrägen Flanke (19) ausgebildet ist, sowie einen Innenabschnitt, der in eine Vielzahl von Zähnen (14) unterteilt ist, die einen Basisabschnitt (15) geringer Höhe aufweisen, der sich in Ruhestellung in einer radialen Ebene erstreckt, sowie einen aktiven Abschnitt (16), der zur radialen Ebene geneigt ist, und die miteinander über Verbindungsrandabschnitte (17) verbunden sind, derart, dass die Verformung dieser Verbindungsrandabschnitte (17), die aus einer Verformung der gesamten Ringscheibe (13) resultiert, gegenüber der der Zähne (14) vorrangig ist, wobei die Vorrichtung bei einer übermäßigen, auf das Rohr (18) ausgeübten Auszugskraft einen Anschlag für die Zähne (14) umfasst, um den sich jeder Zahn verschwenkt, wobei der Randabschnitt der Ringscheibe dann an der schrägen Flanke (19) der Nut (12) zur Anlage kommt, **dadurch gekennzeichnet, dass** die aktiven Abschnitte (16) der Zähne (14) nach dem Verschwenken Seitenränder (26) haben, die paarweise direkt aneinander angrenzen, derart, dass die genannten Seitenränder (26) im Wesentlichen in Kontakt stehen.

6. Vorrichtung nach Anspruch 5, **dadurch gekennzeichnet, dass** sie einen rohrförmigen Stößel (20) umfasst, der im Inneren der Bohrung (2) verschiebbar zwischen einer ersten inaktiven ausgefahrenen Stellung und einer zweiten aktiven eingefahrenen Stellung gelagert ist, in der die Zähne der Ringscheibe aus ihrer Ruhestellung durch eine Nase (23) des Stößels ausgelenkt sind, wobei die Nase des Stößels in seiner inaktiven Stellung den Anschlag für die Zähne bildet.

7. Vorrichtung nach Anspruch 6, **dadurch gekennzeichnet, dass** die Ringscheibe nach dem Verschwenken in einer stabilen zweiten Form ist, in der die Basis (15) der Zähne geneigt und deren aktiver Abschnitt (16) in einer im Wesentlichen radialen Ebene enthalten ist.

## Claims

1. A method of making a washer for a tube coupler device, the method including a step of forming active portions (16) of teeth (14) in an inner portion of a washer blank in such a manner that the active portions (16) have respective free edges defining a substantially continuous inside edge of the washer and arranging to penetrate into an outside surface of the tube, **characterized in that** said step is performed by shearing, the shearing does not result in material being removed from the washer blank.

2. A method according to claim 1, **characterized in that** the shearing is performed on radial lines of cut.

3. A method according to claim 2, in which the teeth (14) of the washer include root portions (15) that are connected to the active portions (16), the method being **characterized in that** it includes a subsequent step of shaping the washer in such a manner that the root portions extend in a radial plane with the active portions being inclined relative to the root portions.

4. A method according to any one of claims 1 to 3, **characterized in that** it includes a step of deforming each active portion to form at least one portion that projects relative to a general plane of the tooth.

5. A tube coupler device comprising a body (1) having a bore (2) for receiving the end of a tube (18) and means for retaining the tube in the bore, said means being constituted by an elastically-deformable washer (13) comprising an outer portion placed in a groove (12) formed in the bore (2), the groove having a sloping downstream wall (19), and an inner portion subdivided into a plurality of teeth (14), each possessing a short root portion (15) extending at rest in a radial plane, and an active portion (16) inclined relative to the radial plane, which teeth are interconnected by peripheral connection portions (17) such that the deformation of the peripheral connection portions (17) that results from the washer (13) as a whole being deformed is greater than the deformation of the teeth (14), the device including an abutment for the teeth (14) when an excessive extraction force is applied to the tube (18), each tooth being capable of rocking about the abutment, the peripheral portion of the washer then coming to bear against the sloping wall (19) of the groove (12), being **characterized in that** after rocking, the active portions (16) of the teeth (14) have side edges (26) that are immediately adjacent to one another in pairs so that said side edges are substantially in contact.

6. A device according to claim 5, **characterized in that** it includes a tubular pusher (20) mounted to slide in the bore (2) between an inactive extended first position and an active inserted second position in which the teeth of the washer are moved away from their rest position by a nose (23) of the pusher, with the nose of the pusher in its inactive position constituting the abutment for the teeth.

7. A device according to claim 6, **characterized in that** after the teeth have rocked against the abutment, the washer is in a second stable shape in which the root (15) of each tooth is inclined while the active portion (16) of each tooth is contained in a plane that is substantially radial.
